# EUROPEAN PATENT SPECIFICATION

(11) **EP 1 054 929 B1**
(45) Date of publication and mention of the grant of the patent: **31.03.2004**
(21) Application number: 98964888.6
(22) Date of filing: 23.12.1998
(51) Int. Cl.: C08L 67/02, C09K 3/16, C08L 69/00, C08L 77/00, C08L 81/02, C08L 55/02, C08L 23/06, C08L 23/16, C08L 71/12

(54) **ANTISTATIC POLYMER COMPOSITION AND MOLDINGS THEREOF**
ANTISTATISCHE POLYMERZUSAMMENSETZUNG UND DARAUS HERGESTELLTE FORMTEILE
COMPOSITION POLYMERE ANTISTATIQUE ET MOULAGES REALISES A PARTIR DE LADITE COMPOSITION

(30) Priority: 24.12.1997 JP 36600397
(43) Date of publication of application: 29.11.2000
(73) Proprietor: E.I. DU PONT DE NEMOURS AND COMPANY, Wilmington Delaware 19898 (US)
(72) Inventor: KOBAYASHI, Toshikazu, Tochigi 329-1104 (JP)
(74) Representative: Carpmaels & Ransford
(86) International application number: PCT/US1998/027428
(87) International publication number: WO 1999/033918

(56) References cited:
- EP-A- 0 149 091
- EP-A- 0 242 158
- EP-A- 0 303 489
- EP-A- 0 613 919
- US-A- 3 636 135
- US-A- 3 839 245
- US-A- 4 218 549
- US-A- 4 548 978
- PATENT ABSTRACTS OF JAPAN vol. 013, no. 461 (C-645), 18 October 1989 & JP 01 178554 A (KANEGAFUCHI CHEM IND CO LTD), 14 July 1989

## Description

### Field of the Invention

The present invention relates to an antistatic polymer composition used to mold parts for which an antistatic effect is demanded, such as the transfer medium-separating guide parts of electrophotographic devices such as copiers and laser printers, which are placed at specific locations to guide the transfer medium, e.g., paper or polyester film, to which the electrostatic latent image is transferred, from the light-sensitive drum to the transfer zone and also to the fixing roller and to convey it from the device. More specifically, it relates to an antistatic polymer composition that can maintain its antistatic effect permanently due to the combination of a polyetherester amide, an ion source, and a plasticizer of the polyetherester amide, and also to moldings thereof.

### Background of the Invention

Polymers such as polyesters and polyamides are widely used in various fields such as packaging materials, electrical/electronic parts, and automotive parts. However, the moldings are likely to become charged electrostatically, so they cause static electricity problems. For example, the transfer medium-separating guide parts placed at specific locations in electrophotographic devices such as copiers and laser printers cause paper jams when the paper becomes difficult to separate because of static electricity.

In the past, a low-molecular-weight antistatic agent composed mainly of surfactant was incorporated into the polymer at the molding process or applied to the molding's surface in a finishing process in order to control the surface specific resistance of the molding to 10¹³-10⁸Ω. However, the antistatic effect of surfactants is brought about by the equilibrium moisture adsorbed on the surfactant, so a sufficient antistatic effect was not manifested under low humidity. Also, the surfactant is removed by rubbing back and forth or washing, and the antistatic effect disappears.

Hence, polymers in which conductive materials such as conductive carbon fibers or metal fibers are incorporated as filler, polymers in which hydrophilic or conductive monomers are incorporated by copolymerization to lower the electrical resistance of the polymer itself, and polymers rendered antistatic by alloying a hydrophilic polymer in the polymer have been developed. Also, various antistatic agents such as polyether systems, quaternary ammonium salt systems, sulfonic acid systems, and betaine systems have been introduced as permanent antistatic agents for addition to polymers *(Plastics Age,* Nov. 1993, published by Plastics Age Co.).

Specific examples of antistatic polyester compositions include an antistatic polymer composition obtained by compounding a thermoplastic resin with at least one polyoxyalkylene glycol or derivative thereof, a monomer unit comprising a vinyl-system unsaturated sulfonic acid or salt thereof, and a vinyl-system polymer to which an unsaturated aliphatic carboxylic acid alkyl ester with an alkyl group having 1-15 carbon atoms is bonded (Japanese Patent Application Kokai Publication Sho 60-202150); a polyester film with an antistatic effect obtained by compounding polyethylene terephthalate with a polyethylene glycol having a weight-average molecular weight of 4,000 to 50,000, an alkali metal salt of an alkylsulfonic acid, and an alkali metal salt of alkylbenzenesulfonic acid (Japanese Patent Application Publication Hei 2-232257); a polymer mixture containing polyester and a copolyetherester block copolymer with a polyether block derived from poly(propylene oxide) glycol having an ethylene oxide content of 15-35 wt% and a number-average molecular weight of 1,500 to 3,000 and capped with ethylene oxide (Japanese Patent Application Kokoku Publication Hei 7-110918); a composition with a permanent antistatic effect comprising polyetherester obtained by polycondensation of an aromatic dicarboxylic acid with 6-20 carbon atoms and/or ester thereof, poly(alkylene oxide) glycol having a number-average molecular weight of 200-50,000, and a glycol with 2-8 carbon atoms and a polycarbonate resin (Japanese Patent Application Kokai Publication Hei 8-245869); a thermoplastic resin composition obtained by compounding an aromatic polycarbonate resin, a block copolyamide resin, an impact modifier, phosphorus-containing compound with a spiro ring structure, and a metal deactivator (Japanese Patent Application Kokai Publication Hei 9-12854); and a permanent antistatic resin composition comprising a polyetherester composed of a para-oriented aromatic dicarboxylic acid component with 4-20 carbon atoms, a specific aromatic diol component ring-substituted with a sulfonate salt group, a glycol component of 2-10 carbon atoms, and a poly(alkylene oxide) component with a number average molecular weight of 200-50,000 and having two ester-forming functional groups in its molecules, and a thermoplastic resin such as ABS (Japanese Patent Application Kokai Publication Hei 9-176497). However, the development of polymer compositions that can manifest a more uniform antistatic effect in the molding's surface is desired.

### Problems this invention is to solve

The problem addressed by this invention is to provide an antistatic polymer composition that makes it possible for moldings to manifest a uniform antistatic effect permanently with little change in surface resistance owing to humidity. More specifically, the problem addressed by this invention is to provide an antistatic polymer composition that is ideally used for polymer moldings where static electricity is a problem, such as the transfer medium-separating guide parts placed at specific locations in electrophotographic devices.

Another object is to provide a polymer composition giving further water-repellency with maintaining excellent antistatic effect by reducing changes in surface resistivity of molded article therefrom, which is useful in moldings requiring both antistatic effect and water-repellency.

### Summary of the Invention

As a result of studies to solve such problems, the present inventors discovered that an outstanding antistatic effect can be provided by compounding a polyetherester amide, an ion source or electrolyte, and a plasticizer of the polyetherester amide in the matrix polymer. That is, the antistatic polymer composition according to the first of these inventions is characterized in that it contains
(A) one or more polymers selected from the group consisting of polyester, polycarbonate, polyamide, polyoxymethylene, polyphenylene sulfide, and compounds of polyphenylene oxide and polystyrene;
(B) a polyetherester amide;
(C) an ion source comprising (i) a source of at least one carboxyl group or sulfo group selected from the group consisting of hydrocarbon acids containing 6-54 carbon atoms, sulfonic acids and organic polymers with at least one bonded carboxyl group or sulfo group and (ii) a source of at least one metal ion that is selected from the group consisting of sodium ion, potassium ion, lithium ion, magnesium ion, and zinc ion and that can react with the carboxyl group or sulfo group of (i), solid electrolytes or polymer electrolytes ; and
(D) a plasticizer of the aforementioned polyetherester amide (B).

The second invention is the antistatic polymer composition of the aforementioned item (1) characterized in that the aforementioned plasticizer (D) is a plasticizer represented by formula (1): 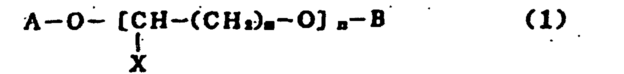 (wherein m is an integer of 1-3, n is an integer of 4-25, A is a C₁-C₁₀ alkyl, acyl, or aroyl, B is a C₁-C₁₀ alkyl, acyl or aroyl, and X is H, CH₃, or C₂H₅).

The third invention is the antistatic polymer composition of any one of the aforementioned item(1) to (2) characterized in that it contains 40.0-98.4 wt% of polymer (A), 1.0-35.0 wt% of polyetherester amide (B), 0.1-15.0 wt% of ion source (C), and 0.5-10.0 wt% of plasticizer (D) with respect to the weight of the composition as a whole.

The fourth invention is the antistatic polymer composition characterized in comprising:
(A) one or more polymers selected from the group consisting of ABS (acrylonitrile butadiene styrene), polyethylene, polypropylene, polypropylene copolymer and EPDM (ethylene/propylene/diene) elastomer;
(B) a polyetherester amide;
(C) an ion source comprising (i) a source of at least one carboxyl group or sulfo group being selected from the group consisting of hydrocarbon acids containing 6-54 carbon atoms, sulfonic acids and organic polymers with at least one bonded carboxyl group or sulfo group and (ii) a source of at least one metal ion that is selected from the group consisting of sodium ion, potassium ion, lithium ion, magnesium ion, and zinc ion and that can react with the carboxyl groups or sulfo group of (i), solid electrolytes or polymer electrolytes ; and (D) a plasticizer of the aforementioned polyetherester amide (B).

The fifth invention is the antistatic polymer composition of any one of the aforementioned item(1) to (4) characterized in further comprising a water-repellent comprising fluorinated compounds, silicone compounds or a mixture thereof.

Still another invention is moldings such as the transfer medium-separating guide parts for electrophotographic devices and any molded items requiring antistatic effect and water-repellency characterized in that they are molded from the above antistatic polymer composition.

### Detailed Description of the Invention

The antistatic polymer composition of this invention has antistatic properties of at least a degree that can control the surface specific resistance of moldings to 10¹³-10⁸ Ω.

Polymer (A) of this invention is one or more polymers selected from the group consisting of polyester, polycarbonate, polyamide, polyoxymethylene, polyphenylene sulfide, and compounds of polyphenylene oxide and polystyrene.

The polyester is polyethylene terephthalate obtained by polycondensation of ethylene glycol and terephthalic acid, polybutylene terephthalate obtained by polycondensation of butanediol and terephthalic acid, or a copolymer of ethylene terephthalate or polybutylene terephthalate that contains another comonomer component in a range that provides physical or chemical properties. As comonomer components used in manufacturing the copolymer, ethylene glycol, 1,2-propylene glycol, pentanediol, hexanediol, 1,4-cyclohexanedimethanol, and the like can be mentioned as the glycol component and isophthalic acid and naphthalenedicarboxylic acid can be mentioned as the dicarboxylic acid component.

The intrinsic viscosity of the polyester is 0.3-1.3, preferably 0.5- 1.0, more preferably 0.6-0.9.

The polyesters ideally used in this invention are polyethylene terephthalate, polybutylene terephthalate, and compounds of these.

In addition, the polyesters of this invention also include melt-processible polyesters or polyester amides that can form an anisotropic molten phase. generally called thermotropic liquid crystal polymers. The constituents of such polymers are aromatic hydroxycarboxylic acids, aromatic dicarboxylic acids, aliphatic dicarboxylic acids, aromatic diols, aliphatic diols, aromatic hydroxylamines, and aromatic diamines. The melt-processible polyesters or polyester amides that can form an anisotropic molten phase are obtained by polymerizing one of these constituents or by copolymerizing two or more of these constituents.

The following specific examples can be mentioned: aromatic polyesters obtained by polymerizing one or more aromatic hydroxycarboxylic acids; aromatic polyesters obtained by polymerizing an aromatic dicarboxylic acid, one or more aliphatic dicarboxylic acid, an aromatic diol, and one or more aliphatic diols; aromatic polyesters obtained by polymerizing an aromatic hydroxycarboxylic acid as the main component and one or more components selected from the group consisting of aromatic dicarboxylic acids, aliphatic dicarboxylic acids, aromatic diols, and aliphatic diols; aromatic polyester amides obtained by polymerizing an aromatic hydroxylamine, one or more aromatic diamines, and one or more aromatic hydroxycarboxylic acids; aromatic polyester amides obtained by polymerizing an aromatic hydroxylamine, one or more aromatic diamines, one or more aromatic hydroxycarboxylic acids, an aromatic dicarboxylic acid, and one or more aliphatic carboxylic acid, and aromatic polyester amides obtained by polymerizing an aromatic hydroxylamine, one or more aromatic diamines, one or more aromatic hydroxycarboxylic acids, an aromatic dicarboxylic acid, one or more aliphatic carboxylic acids, an aromatic diol, and one or more aliphatic diols.

As examples of aromatic hydroxycarboxylic acids, 4-hydroxybenzoic acid, 3-hydroxybenzoic acid, 2-hydroxybenzoic acid, 6-hydroxy-2-naphthoic acid, and 5-hydroxy-2-naphthoic acid, and hydroxybenzoic acids substituted with halogens, alkyls, and aryls can be mentioned.

As aromatic dicarboxylic acids, terephthalic acid, isophthalic acid, 3,3N-diphenyldicarboxylic acid, 4.4 N -diphenyldicarboxylic acid, 1,4-naphthalenedicarboxylic acid, 1,5-naphthalenedicarboxylic acid, 2,6-naphthalenedicarboxylic acid, and alkyl- and halogen-substituted aromatic dicarboxylic acids such as *tert*-butylterephthalic acid and chloroterephthalic acid can be mentioned.

As aliphatic dicarboxylic acids, cyclic aliphatic dicarboxylic acids such as *trans*-1,4-cyclohexanedicarboxylic acid, *cis*-1,4-cycloheranedicarboxylic acid, and 1,3-cyclohexanedicarboxylic acid and substituted derivatives of these can be mentioned.

As aromatic diols, the following can be mentioned: hydroquinone, diphenol, 4,4 N -dihydroxydiphenyl ether, 3,4 N -dihydroxydiphenyl ether, bisphenol A, 3,4 N -dihydroxydiphenylmethane, 3,3 N -dihydroxydiphenylmethane, 4,4 N-dihydroxydiphenylsulfone, 3,4 N -dihydroxy-diphenylsulfone, 4,4 N -dihydroxydiphenyl sulfide, 3,4 N -dihydroxydiphenyl sulfide, 2,6 N -naphthalenediol, 1,6 N -naphthalenediol, 4,4 N-dihydroxybenzophenone, 3,4 N -dihydroxybenzophenone, 3,3 N-dihydroxybenzophenone, 4,4 N -dihydroxydiphenyldimethylsilane, and alkyl- and halogen-substituted derivatives of these.

As examples of aliphatic diols, cyclic, linear, and branched aliphatic diols such as *trans-*1,4-hexanediol, *cis*-1,4-hexanediol, *trans*-1,3-cyclohexanediol, *cis*-1,2-cyclohexanediol, ethylene glycol, 1,4-butanediol, 1,6-hexanediol, 1,8-octanediol, *trans*-1,4-cyclohexanedimethanol, *cis*-1,4-cyclohexanedimethanol, and *cis*-1,4-cyclohexanedimethanol and substituted derivatives of these can be mentioned.

As examples of aromatic hydroxylamines and aromatic diamines, 4-aminophenol, 3-aminophenol, *p*-phenylenediamine, and *m*-phenylenediamine, and substituted derivatives of these can be mentioned.

The liquid crystal polymers used in this invention generally have a number-average molecular weight of approximately 2,000-200,000, preferably 5,000-50,000, and more preferably 10,000-20,000.

The liquid crystal polymers ideally used in this invention are copolymers of 4-hydroxybenzoic acid and 6-hydroxy-2-naphthoic acid and copolymers of hydroquinone, diphenol, terephthalic acid, 2,6-naphthalenedicarboxylic acid, 4-hydroxybenzoic acid, and 6-hydroxy-2-naphthoic acid.

The polyamide that is another matrix polymer of this invention is obtained by polycondensation of a diamine component and a dicarboxylic acid component. As examples, polyamides obtained by polymerizing one or more diamines selected from the group consisting of aliphatic alkylenediamines, aromatic diamines, and alicyclic diamines and one or more dicarboxylic acid selected from the group consisting of aliphatic dicarboxylic acids, aromatic dicarboxylic acids, and aliphatic aminocarboxylic acids, and compounds of these can be mentioned.

The aliphatic alkylenediamine may be linear or branched. As specific examples, ethylenediamine, trimethylenediamine, tetramethylenediamine, pentamethylenediamine, hexamethylenediamine, 1,7-diaminoheptane, 1,8-diaminooctane, 1,9-diaminononane, 1,10-diaminodecane, 2-methylpentamethylenediamine, and 2-ethyltetramethylenediamine can be mentioned. These aliphatic alkylenedramines can be used alone, or two or more can be used combined.

The aromatic diamines may be used alone, or two or more may he used combined. As an example, *p*-phenylenediamine, *o*-phenylenediamine, *m*-phenylenediamine, *p*-xylenediamine, and *m*-xylenediamine can be mentioned.

As specific examples of alicyclic alkylenediamines, 1,3-diaminocyclohexane, 1,4-diaminocyclohexane, 1,3-bistaminomethyl)cyclohexane, bis(aminomethyl)cyclohexane, bis(4-aminocyclohexyl)methane, 4,4N -diamino-3,3N -dimethyldicyclohexylmethane, isophoronediamine, and piperazine can be mentioned. These can be used alone, or two or more can be used combined.

As aliphatic dicarboxylic acids, adipic acid, sebacic acid, azelaic acid, and dodecanedioic acid can be mentioned. These can be used alone, or two or more can be used combined.

As examples of aromatic dicarboxylic acids, terephthalic acid, isophthalic acid, phthalic acid, 2-methylterephthalic acid, and naphthalenedicarboxylic acid can be mentioned, and as an example of aromatic aminocarboxylic acids, *p*-aminobenzoic acid can be mentioned. These aromatic monomers can be used alone, or two or more can be used combined.

As specific examples of aminocarboxylic acids, ,-aminocaproic acid and T -aminoundecanoic acid can be mentioned. These can be used alone, or two or more can be used combined.

Also, the number-average molecular weight of the polyamide is 2,000-50,000, preferably 5,000-40,000, and still more preferably 7,000-30,000.

The polyamides ideally used in this invention are nylon 66, nylon 6, copolymer of nylon 66 and nylon 6, and compounds of these.

Polycarbonates are obtained by the ester-exchange method, which reacts bisphenol A with diphenyl carbonate in a molten state, and by the solution polycondensation method, which reacts bisphenol A with phosgene in pyridine as solvent and acid-acceptor.

The number-average molecular weight of the polycarbonate is 6.000-100,000, preferably 10,000-80,000, and still more preferably 15,000-50,000.

Polyoxymethylene homopolymer is obtained by polymerization of formaldehyde, and copolymer is obtained by polymerization of trioxane with a cyclic ether or cyclic formal.

The number-average molecular weight of polyoxymethylene is 8,000-150,000, preferably 12,000-100,000, and still more preferably 20,000-80,000 for both homopolymer and copolymer.

Polyphenylene sulfide is obtained by reacting *p*-dichlorobenzene and sodium sulfide in a polar solvent such as *N*-methylpyrrolidone at a high temperature of 200°C or above.

The weight-average molecular weight of polyphenylene sulfide is 5,000-90,000, preferably 8,000-70,000, and still more-preferably 10,000-60,000.

With respect to compounds of polyphenylene oxide and polystyrene, polyphenylene oxide and polystyrene have the property of mutually dissolving completely in all ratios, so they may be mixed in any ratio.

The compound of polyphenylene oxide and polystyrene ideally used in this invention is a compound for which the weight ratio of polyphenylene oxide to polystyrene is 70:30 to 50:50.

Other suitable matrix polymers of the present invention may be, for example, ABS (acrylonitrile butadiene styrene), polyethylene, polypropylene, polypropylene copolymer and EPDM(ethylene/propylene/diene) elastomer.

Polyetherester amides (B) are used in this invention. Polyethers have good compatibility with the matrix polymers, polyester and polyamide, so a uniform antistatic effect can be provided to the surface of moldings.

The content of the polyetherester amide is 1.0-35.0 wt%, preferably 3.0-20.0 wt%, and still more preferably 4.5-12.5 wt%, with respect to the weight of the composition. If less than 1.0 wt%, the antistatic effect will be insufficient, and if more than 35.0 wt%, this will lead to a decline in mechanical properties.

Ion source (C) used in this invention comprises
(i) a source of at least one carboxyl group or sulfo group selected from the group composed of hydrocarbon acids with 6-54 carbon atoms, sulfonic acids and organic polymers with at least one bonded carboxyl group or sulfo group and
(ii) a source of at least one metal ion that is selected from the group composed of sodium ion, potassium ion, lithium ion, magnesium ion, and zinc ion and that can react with the carboxyl groups or sulfo group of (i), solid electrolytes or polymer electrolytes.

Solid electrolytes or polymer electrolytes are used instead of the ion source comprising the source of carboxyl group or sulfo group defined (i) and metal ion source defined (ii) in the antistatic polymer composition of this invention according to the intended application of use. Examples of the solid electrolytes include chemical composition which is expressed by XY or XW2 wherein X is Li,Na, K, or NH₄, Y is ClO4, I, BF₄, or CF3SO3 and W is Mg,Ca, Zn, or Cu.

In addition, polymer electrolytes capable of being used in this invention represent a wide range of compositions that can, for example, be polystyrenesulfonic acid sodium salt and acrylate copolymer ammonium salt.

By including the ion source, ions can be sufficiently supplied to the aforementioned ion-conducting polymer, so the ion-conducting polymer can sufficiently manifest an antistatic effect.

Preferably, carboxyl-group or sulfo group source (i) is a source of at least one carboxyl group or sulfo group [selected from the group] consisting of hydrocarbon acids containing 7 6-25 carbon atoms, sulfonic acids and organic polymers that contain pendant carboxyl groups or sulfo groups.

More preferably, ionomers composed of organic ionic hydrocarbon copolymers of α-olefins with 2-5 carbon atoms and α, β-ethylenically unsaturated carboxylic acids with 3-5 carbon atoms whose carboxyl groups are at least partially neutralized with sodium or potassium cations are ideally used.

Other suitable ionomers contain (i) polyethylene terephthalate and/or polybutylene terephthalate oligomer and (ii) a substance derived from a sodium and/or potassium ion source that can react with the oligomer-like carboxyl end groups of (i).

The content of the ion source is 0.1-15.0 wt%, preferably 0.3-12.0wt%, more preferably 1.0-8.0 wt%, with respect to the weight of the composition. If less than 0.1 wt%, the antistatic effect will be insufficient, and if more than 15.0 wt%. this will lead to a decline in incchanical properties. The ion source contains a sufficient amount of the metal ion source that the concentration of metal in the composition will be greater than 1.0 wt%.

Plasticizer (D) used in this invention has a plasticizing effect on the polyetherester amide used. As specific examples, phthalate ester plasticizers such as dimethyl phthalate, dibutyl phthalate, butyl benzyl phthalate, and di-2-ethylhexyl phthalate, phosphate ester plasticizers such as tricresyl phosphate and triphenyl phosphate, sulfonamide plasticizers such as *o*,*p*-toluenesulfonamide, *N*-ethyl-*o*,*p*-toluenesulfonamide, *N*-methylbenzenesulfonamide, *N*-ethylbenzenesulfonamide, and *N*-butylbenzeaesulfonamide, and polyether system plasticizers can be mentioned. The preferred plasticizer is represented by formula (1): 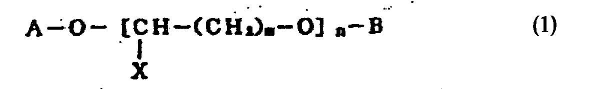 wherein m is an integer of 1-3, n is an integer of 4-25, A is a C₁-C₁₀ alkyl, acyl, or aroyl, B is a C₁-C₁₀ alkyl, acyl, or aroyl, and X is H, CH₃, or C₂H₅.

Because the composition of this invention contains a plasticizer, the ions can easily move under high-temperature conditions, so the higher the temperature at which the molding is used, the more outstanding the antistatic effect that can be manifested.

The preferred plasticizer is obtained when m is 1, or n is 4-14, or X is H, and especially when m is 1, n is 4-14, and also X is H. The more preferred plasticizer is obtained when m is 1, or n is 7-13, or X is H, or A is an acyl with 8 carbon atoms or methyl, or B is an acyl with 8 carbon atoms, and especially when m is 1, n is 7-13, X is H, A is an acyl with 8 carbon atoms or methyl, and B is an acyl with 8 carbon atoms.

The preferred specific examples are polyethylene glycol 400 bis(2-ethylhexanoate), methoxypolyethylene glycol 550 2-ethyhexanoate, and tetraethylene glycol bis(2-ethylhexanoate). Of these, polyethylene glycol 400 bis(2-ethylhexanoate) is most ideally used.

The amount of plasticizer contained is 0.5-10.0 wt%, preferably 1.0-8.0 wt%, and still more preferably 2.0-6.0 wt% with respect to the weight of the composition. If less than 0.5 wt%, the antistatic effect will not be sufficient, and if more than 10.0 wt%, this will lead to a decline in mechanical properties.

Well-known flame retardants can be mixed in the composition of this invention. Specifically, brominated flame retardants such as polydibromostyrene, polytribromostyrene, polypentabromostyrene, decabromodiphenyl, tetrabromodiphenyl, hexabromodiphenyl ether, octabromodiphenyl ether, decabromodiphenyl ether, tetrabromodiphenyl sulfide, polypentabromobenzyl acrylate, brominated phenoxy resin, and epoxy-terminated phenoxy resin [sic] can be mentioned. Epoxy-terminated phenoxy resin [sic] and brominated polystyrene are preferred. The loading of flame retardant is usually 7-20 wt% based on the weight of the composition.

Along with the flame retardant. antimony compounds well known as flame-retarding assistants, such as antimony oxides and sodium antimonate, may be compounded.

Inorganic fillers commonly used to reinforce engineering plastics can also be compounded. As specific examples of inorganic fillers, glass fibers, carbon fibers, potassium titanate, whiskers, kaolin, clay, talc, wollastonite, calcium carbonate, silica, and mica can be mentioned. Glass fibers are ideally used. The loading of inorganic filler is usually 5-60 wt% based on the weight of the composition.

In addition to the above components, the composition of this invention may be compounded with commonly used additives such as impact modifiers, heat stabilizers, antioxidants, dyes, pigments, and release agents in ranges that do not impair its properties.

Also, it is possible to obtain a polymer giving significant improvements in both antistatic effect and water-repellency by adding any water-repellents, such as fluorinated compounds, silicone compounds or chemical compositions thereof that have low surface free energy and well know in the art, in appropriate amounts in addition to the aforementioned antistatic polymer composition of this invention. When the water-repellent is used in combination with a low-molecular-weight antistatic agent composed mainly of surfactant incorporated into the polymer at the molding process or applied to the molding's surface in a finishing process, it may be able to improve sliding characteristics by reducing coefficient of kinetic friction, but can easily cause static electricity resulting into static electricity problem. Examples of the water-repellents are PTFE,PFA,FEP,ETFE, modified silicone such as silicone oil, silicone gum, amino-modified silicone and epoxy-modified silicone, fluorosilicone and perfluoroalkyl group containing oligomer.

The polymer composition of this invention can be manufactured by any well-known method used in the past. For example, it can be melt blended using the mixing devices generally used, such as the Banbury mixer, extruders, and various kneaders. With respect to the order of blending, all the components may be blended at the same time, or the polyetherester amide, ion source, and plasticizer may be fed from side feeders.

The composition of this invention can be used to manufacture moldings that are used in devices for which static electricity is a problem, such as the transfer medium-separating guide parts placed at specific locations in electrophotographic devices by a well-known method such as injection molding.

Also, it is possible to obtain products formed by molding the antistatic polymer composition of this invention, which has surface resistivity in the range of 10⁷ to 10 ¹³ Ω, as measured according to test method of ASTM D 257 and is capable of being applied an electrostatic painting directly onto surface of the molded article without any primer. Since the molded articles made from the antistatic polymer composition of this invention don't require to be applied any surface treatment agent such as a solution in alcohol containing 0.5 to 1 % by weight of surfactant on the surface of the molded article to reduce its surface specific resistance by moisture absorption by the surfactant, the electrostatic painting may be used for the molded artiles made from the antistatis polymer composition of this invention.

### Practical examples

This invention will now be explained with practical examples, but it is not limited to only these examples.

### Practical Example 1, Comparative Examples 1-5

The components shown in Table 1 were melt blended with a twin-screw extruder (ZSK-40 manufactured by W&P). After water cooling, pellets were manufactured. The pellets obtained were used to mold test pieces (7.5 mm x 12.5 mm x 3 mm). The mold temperature and resin temperature when molding were 110°C and 290°C, respectively.

The test pieces obtained were used to determine surface resistivity and volume resistivity. The results are shown in Table 1. The methods of determination were as follow:
Method for determining surface resistivity: Based on ASTM D257
Method for determining volume resistivity: Based on ASTM D257

The components referred to in the tables are as follows:
Polymer: Polyethylene terephthalate with an intrinsic viscosity of 0.65 (trade name Rynite manufactured by DuPont).
Component B: Polyetherester amide copolymer (trade name Perestat 6321 manufactured by Sanyo Chemical Industries)
Ion source: Sodium-neutralized ethylene-methacrylic acid copolymer with 60% of the carboxylic acid of a copolymer composed of ethylene-methacrylic resin (weight ratio 85/15) neutralized with sodium (trade name Surlyn 8920 manufactured by DuPont)
Plasticizer: Polyethylene glycol 400 bis(2-ethylhexanoate) (trade name Rionon DEH-40 manufactured by Lion K.K.)
Glass fibers: PPG3540 chopped strand

**Table I**

| | **PE 1*** | **CE 1*** | **CE 2** | **CE 3** | **CE 4** | **CE 5** |
|---|---|---|---|---|---|---|
| polymer (wt%) | 58.5 | 70.0 | 63.0 | 64.0 | 61.5 | 60.0 |
| polyetherester amide (wt%) | 6.0 | 0 | 0 | 6.0 | 6.0 | 6.0 |
| Ion source (wt%) | 4.0 | 0 | 3.5 | 0 | 0 | 4.0 |
| Plasticizer (wt%) | 2.5 | 0 | 1.5 | 0 | 2.5 | 0 |
| Glass fibers (wt%) | 30.0 | 30.0 | 30.0 | 30.0 | 30.0 | 30.0 |
| Surface resistivity Ω | 8.91 H 10¹² | 1.94 H 10¹⁶ | 2.00 H 10¹⁷ | 2.24 H 10¹⁶ | 1.92 H 10¹⁴ | 5.40 H 10¹³ |
| Volume resistivity (Ω-cm) | 1.45 H 10¹³ | 8.00 H 10¹⁵ | 1.30 H 10¹⁶ | 2.75 H 10¹⁵ | 2.95 H 10¹⁴ | 1.4 H 10¹⁴ |

| | | | | | | |
|---|---|---|---|---|---|---|
| ^{*}PE = Practical Example CE = Comparative Example | | | | | | |

When Practical Example 1 and Comparative Examples 1-5 were compared, the molding made from the composition of this invention had high surface specific resistance and volume specific resistance and was superior in antistatic effect.

When Comparative Example 3 and Comparative Example 4 were compared, it was found that the antistatic effect is improved by using a plasticizer along with the polyetherester amide, and when Comparative Example 3 and Comparative Example 5 were compared, it was found that the antistatic effect is also improved by using an ion source along with the polyetherester amide. However, neither case showed improvement in antistatic effect to the extent of Practical Example 1, in which both a plasticizer and an ion source were used along with the polyetherester amide.

### Practical Examples 2-5, Comparative Examples 6-9

Test pieces were molded using a composition comprising 41.0 wt% of polyethylene terephthalate having an intrinsic viscosity of 0.65 (trade name Rynite manufactured by DuPont), 5.5 wt% of polyetherester amide copolymer (trade name Perestat 6321 manufactured by Sanyo Chemical Industry), 3.5 wt% of ethylene-methacrylic acid copolymer neutralized with sodium (trade name Surlyn 8920 manufactured by DuPont), 1.5 wt% of polyethylene glycol 400 bis(2-ethyl-hexanoate) (trade name Rionon DEH-40 manufactured by Lion K.K.), 13,0 wt% of polytribromostyrene (Pyro-chek 68 manufactured by Nissan Ferro), 0.5 wt% of antimony trioxide, and 35.0 wt% of glass fibers (PPG3540 chopped strand) for the practical examples.

Test pieces were molded using a composition comprising 99.0 wt% of polyethylene terephthalate having an intrinsic viscosity of 0.65 (trade name Rynite manufactured by DuPont) and 1.0 wt% of sodium alkylsulfonate as the comparative examples.

The test pieces obtained were used to test the effects of temperature and humidity on surface specific resistance. The results of measurement at 25°C, 50°C, 80°C, and 120°C are shown in Tables 2, 3, 4, and 5, respectively.

**Table 2**

| Temperature: 25°C | | |
|---|---|---|
| | **Surface resistivity (Σ)** | |
| Humidity (%) | Practical Example 2 | Comparative Example 6 |
| 10 | 3.66 H 10¹¹ | 1.19 H 10¹⁶ |
| 30 | 1.59 H 10¹⁰ | -- |
| 50 | 1.17 H 10¹⁰ | 7.56 H 10¹⁰ |
| 70 | 2.77 H 10¹⁰ | -- |
| 95 | 1.43 H 10¹⁰ | 1.35 H 10¹⁰ |

**Table 3**

| Temperature: 50°C | | |
|---|---|---|
| | **Surface resistivity (Σ)** | |
| Humidity (%) | Practical Example 3 | Comparative Example 7 |
| 10 | 7.75 H 10⁹ | 4.86 H 10¹⁴ |
| 30 | 3.58 H 10⁹ | -- |
| 50 | 1.71 H 10⁹ | 3.65 H 10⁹ |
| 70 | 7.83 H 10⁸ | -- |
| 95 | 5.81 H 10⁷ | 3.92 H 10⁸ |

**Table 4**

| Temperature: 80°C | | |
|---|---|---|
| | **Surface resistivity (Σ)** | |
| Humidity (%) | Practical Example 4 | Comparative Example 8 |
| 10 | 1.12 H 10⁹ | 2.97 H 10¹⁴ |
| 30 | 4.98 H 10⁸ | -- |
| 50 | 5.40 H 10⁸ | 7.57 H 10¹⁰ |
| 70 | 1.44 H 10⁸ | -- |
| 95 | 2.73 H 10⁷ | 1.30 H 10⁸ |

**Table 5**

| Temperature: 120°C | | |
|---|---|---|
| | **Surface resistivity (Ω)** | |
| Humidity (%) | Practical Example 5 | Comparative Example 9 |
| 10 | 1.46 H 10⁹ | 5.67 H 10¹² |

Under any of the temperature conditions, the difference between the surface specific resistance of the practical examples and comparative examples became greater as the hamidity became lower, and a difference arose in their antistatic effects. And even at the same humidity, the antistatic effect of the comparative examples declined as the temperature increased, but the antistatic effect of the practical examples increased as the temperature increased.

### Practical Example 6 and Comparative Example 10

The same test pieces as in Practical Example 2 and Comparative Example 6, respectively, were used. To investigate durability of rubbing resistance, the surface was wiped with a cloth moistened with water or with a dry cloth, and surface specific resistivity was determined.

**Table 6**

| Temperature: 25°C, humidity: 50% | | |
|---|---|---|
| | **Surface resistivity (Σ)** | |
| Number of times wiped with damp cloth | Practical Example 6 | Comparative Example 10 |
| 0 | 1.17 H 10¹⁰ | 7.56 H 10¹⁰ |
| 1 | 1.99 H 10¹⁰ | 1.59 H·10¹⁵ |
| 5 | 2.00 H 10¹⁰ | 3.24 H 10¹⁴ |
| Number of times wiped with dry cloth | | |
| 5 | 1.15 H 10¹⁰ | 5.67 H 10¹⁴ |

Whether wiped with a damp cloth or dry cloth, there was no change in the antistatic effect of moldings made from the composition of this invention, but when a surfactant was used as in the comparative example, rubbing caused the antistatic effect to decline.

### Examples 7 - 11 and comparative examples 11 and 12

In addition to the matrix polymer, polyetherester amide, plasticizer and glass fibers used in Example 1 and Comparative examples 1 - 5 summarized in Table 1, and additional various ion sources in amount, all as specified in Table 7. The results of surface and volumn Festivities measured according to ASTM D257 are also given in Table 7.

**Table 7**

| | | PE 7* | PA 8* | PA 9 | PA 10 | PA 11 | CE 11 | CE12 |
|---|---|---|---|---|---|---|---|---|
| | polymer (wt%) | 62 | 62 | 59.5 | 62.4 | 51.5 | 62.45 | 62.42 |
| | polyetherester amide (wt%) | 6.0 | 6.0 | 6.0 | 6.0 | 13 | 6.0 | 6.0 |
| | Ion source A (wt%) | | | | | 4 | | 0.08 |
| | Ion source B (wt%) | 0.5 | | | | | 0.05 | |
| | Ion source C (wt%) | | 0.5 | | | | | |
| | Ion source D (wt%) | | | 3 | | | | |
| | Ion source E (wt%) | | | | 0.1 | | | |
| | Plasticizer (wt%) | 1.5 | 1.5 | 1.5 | 1.5 | 1.5 | 1.5 | 1.5 |
| | Glass fibers (wt%) | 30.0 | 30.0 | 30.0 | 30.0 | 30.0 | 30.0 | 30.0 |
| | Surface resistivity (Ω) | 9.67x 10¹² | 1.26x 10¹³ | 1.67x 10¹¹ | 8.62x 10¹¹ | 1.89x 10⁹ | 5.51x 10¹⁴ | 3.26x 10¹⁴ |
| | Volume resistivity (Ω-cm) | 7.21x 10¹² | 8.26x 10¹² | 4.83x 10¹² | 2.28x 10¹¹ | 2.28x 10⁸ | 1.89x 10¹⁴ | 2.41x 10¹⁴ |

| | | | | | | | | |
|---|---|---|---|---|---|---|---|---|
| ^{*}PE = Pratical Examp le CE = Comparative Example | | | | | | | | |

Ion source A: Sodium-neutralized ethylene-methacrylic acid copolymer with 60% of the carboxylic acid of a copolymer composed of ethylene-methacrylic resin (weight ratio 85/15) neutralized with sodium (trade name Surlyn 8920 manufactured by DuPont),
Ion source B: Sodium Montanate, commercially available under the tradename Hostamont NaV 101 from Clariant Japan, Inc.
Ion source C: Lithium Montanate, commercially available under the tradename Hostmont LiV 103 from Clariant Japan, Inc.
Ion source D: Polystyrenesulfonic acid sodium salt,
Ion source E: Lithium Iodide

### Examples 11 - 13 and Comparative examples 13 -18

To see the effect of adding water-repellents in addition to the antistatic polymer composition of this invention, additional formulations of examples 11-13 and comparative examples 13 - 18 were prepared, as summarized in the following Table 8. Using water-repellent of fluorinated compounds or silicone compounds instead of the surfactant, Examples 11 -13, is seen to provide both water-repellency maintaining and antistatic effect.

The results, as to whether or not water-repellency is improved, and the values of water-repellent angle measured by the commonly known test method, are also given in Table 8.

**Table 8**

| | PE 11 | PA12* | PA13 | CE13 | CE14 | CE 15 | CE16 | CE17 | CE18 |
|---|---|---|---|---|---|---|---|---|---|
| polymer (wt%) | 54.5 | 42.5 | 56 | 66 | 54 | 67.5 | 57.5 | 69 | 70 |
| polyetherester amide (wt%) | 6.0 | 6.0 | 6:0 | | | | 6.0 | | |
| Ion source (wt%) | 4 | 4 | 4 | | 4 | | 4 | | |
| Water-repellent A (wt%) | 3 | | | 3 | | | | | |
| Water-repellent B (wt%) | | 15 | | | 15 | | | | |
| Water-repellent C (wt%) | | | 1.5 | | | 1.5 | | | |
| surfactant (wt%) | | | | 1 | 1 | 1 | | 1 | |
| Plasticizer (wt%) | 2.5 | 2.5 | 2.5 | | | | 2.5 | | |
| Glass fibers (wt%) | 30.0 | 30.0 | 30.0 | 30.0 | 30.0 | 30.0 | 30.0 | 30.0 | 30.0 |
| Surface resistivity (Ω) | 5.22x 10¹² | 6.95x 10¹² | 4.88x 10¹² | 8.62x 10¹¹ | 2.76x 10¹² | 5.51x 10¹⁴ | 8.91x 10¹² | 4.88x 10¹² | 4.88x 10¹⁶ |
| Water repellent angle (°) | 107 | 103 | 109 | 49 | 38 | 46 | 58 | 32 | 68 |

| | | | | | | | | | |
|---|---|---|---|---|---|---|---|---|---|
| ^{*}PE = Pratical Example CE = Comparative Example | | | | | | | | | |

Water-repelent A: Silicone oil master batch, commercially available under the tradename BY27-009 from Toray Dow Silicone, Inc.
Water-repellent B: PTFE powder, commercially available under the tradename MP 1500 from DuPont,
Water-repellent C: Perfluoroalkyl acrylate-alkylacrylate block copolymer, commercially available under the tradename Megafac 178RM from DaiNippon Ink Co., Ltd.

Surfactant: Alkyl-benzene sulfonic acid sodium salt compound, commercially available under the tradename Chemistat 3033 from Sanyo Kasei Kogyo Inc.

### Effects of the invention

According to this invention, it was possible to provide an antistatic polymer composition that is able to manifest a uniform antistatic effect permanently with little change in the surface resistance of moldings owing to humidity. The moldings molded from the polymer composition of this invention are ideally used in devices where static electricity is a problem.

## Claims

1. An antistatic polymer composition **characterized in that** it comprises:
(A) one or more polymers selected from the group consisting of polyester, polycarbonate, polyamide, polyoxymethylene, polyphenylene sulfide, and compounds of polyphenylene oxide and polystyrene;
(B) a polyetherester amide;
(C) an ion source comprising: (i) a source of at least one carboxyl group or sulfo group being selected from the group consisting of hydrocarbon acids containing 6-54 carbon atoms, sulfonic acids and organic polymers with at least one carboxyl group or sulfo group; and (ii) a source of at least one metal ion that is selected from the group consisting of sodium ion, potassium ion, lithium ion, magnesium ion, and zinc ion and that can react with the carboxyl groups or sulfo group of (i), solid electrolytes or polymer electrolytes; and
(D) a plasticizer of the aforementioned polyetherester amide (B).

2. The antistatic polymer composition of Claim 1 **characterized in that** plasticizer (D) of the polyetherester amide (B) is a plasticizer represented by formula (1) 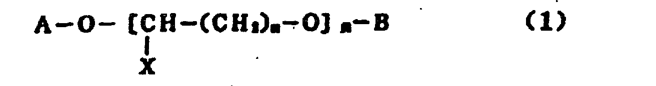 wherein m is an integer of 1-3, n is an integer of 4-25, A is a C₁-C₁₀ alkyl, acyl, or aroyl, B is a C₁-C₁₀ alkyl, acyl, or aroyl, and X is H, CH₃, or C₂H₅.

3. The antistatic polymer composition of Claim 1 **characterized in that** it contains 40.0-98.4 wt% of polymer (A), 1.0-35.0 wt% of polyetherester amide (B), 0.1-15.0 wt% of ion source (C), and 0.5-10.0 wt% of plasticizer (D) with respect to the weight of the composition as a whole.

4. Moldings **characterized in that** they are molded from the antistatic polymer composition of Claim 1.

5. Transfer medium-separating guide parts for electrophotographic devices **characterized in that** they are molded from the antistatic polymer composition of Claim 1.

6. A molded article made from the composition of claim 4 having surface resistivity in the range of 10 ⁷ to 10 ¹³ ohms, as measured under ASTM D 257 and being applied an electrostatic painting directly on surface thereof.

7. An antistatic polymer composition **characterized in that** it comprises
(A) one or more polymers selected from the group consisting of ABS (acrylonitrile butadiene styrene), polyethylene, polypropylene, polypropylene copolymer and EPDM(ethylene/propylene/diene) elastomer;
(B) a polyetherester amide;
(C) an ion source comprising: (i) a source of at least one carboxyl group or sulfo group being selected from the group consisting of hydrocarbon acids containing 6-54 carbon atoms, sulfonic acids and organic polymers with at least one carboxyl group or sulfo group and (ii) a source of at least one metal ion that is selected from the group consisting of sodium ion, potassium ion, lithium ion, magnesium ion, and zinc ion and that can react with the carboxyl groups or sulfo group of (i), solid electrolytes or polymer electrolytes; and
(D) a plasticizer of the aforementioned polyetherester amide (B).

8. The composition of Claim 1 further comprising water-repellent comprising fluorinated compounds, silicon compound or a mixture thereof.

9. A molded article made from the composition of Claim 7.

## Patentansprüche

1. Antistatische Polymerzusammensetzung, aufweisend:
(A) ein oder mehrere Polymere, ausgewählt aus der Gruppe, bestehend aus Polyester, Polycarbonat, Polyamid, Polyoxymethylen, Polyphenylensulfid und Verbindungen von Polyphenylenoxid und Polystyrol;
(B) ein Polyetheresteramid;
(C) eine Ionen-Quelle, aufweisend: (i) eine Quelle für mindestens eine Carboxyl-Gruppe oder Sulfo-Gruppe, die ausgewählt ist aus der Gruppe, bestehend aus Kohlenwasserstoffsäuren mit 6 bis 54 Kohlenstoffatomen, Sulfonsäuren und organischen Polymeren mit mindestens einer Carboxyl-Gruppe oder Sulfo-Gruppe; und (ii) eine Quelle für mindestens ein Metall-Ion, das ausgewählt ist aus der Gruppe, bestehend aus Natrium-Ion, Kalium-Ion, Lithium-Ion, Magnesium-Ion und Zink-Ion, und das mit den Carboxyl-Gruppen oder der Sulfo-Gruppe von (i) reagieren kann, feste Elektrolyten oder Polymerelektrolyten; und
(D) einen Weichmacher des vorgenannten Polyetheresteramids (B).

2. Antistatische Polymerzusammensetzung nach Anspruch 1, **dadurch gekennzeichnet, dass** der Weichmacher (D) des Polyetheresteramids (B) ein Weichmacher ist, der dargestellt wird durch die Formel (1) 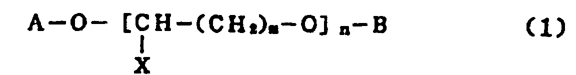 worin m eine ganze Zahl von 1 bis 3 ist, n ist eine ganze Zahl von 4 bis 25, A ist ein C₁-C₁₀-Alkyl, Acyl oder Aroyl, B ist ein C₁-C₁₀-Alkyl, Acyl oder Aroyl und X ist H, CH₃ oder C₂H₅.

3. Antistatische Polymerzusammensetzung nach Anspruch 1, **dadurch gekennzeichnet, dass** sie 40,0% bis 98,4 Gew.% Polymer (A) enthält, 1,0% bis 35,0 Gew.% Polyetheresteramid (B), 0,1% bis 15,0 Gew.% einer Ionen-Quelle (C) und 0,5% bis 10,0 Gew.% Weichmacher (D) bezogen auf das Gewicht der Zusammensetzung als Ganzes.

4. Formteile, **dadurch gekennzeichnet, dass** sie aus der antistatischen Polymerzusammensetzung von Anspruch 1 geformt sind.

5. Transfermedium-trennende Führungsteile für elektrophotographische Vorrichtungen, **dadurch gekennzeichnet, dass** sie aus der antistatischen Polymerzusammensetzung nach Anspruch 1 geformt sind.

6. Formartikel, hergestellt aus der Zusammensetzung nach Anspruch 4 mit einem Oberflächenwiderstand im Bereich von 10⁷ bis 10¹³ Ohm, gemessen nach dem Standard ASTM D 257 und auf die Oberfläche davon direkt aufgebracht einen elektrostatischen Lack.

7. Antistatische Polymerzusammensetzung, aufweisend:
(A) ein oder mehrere Polymere, ausgewählt aus der Gruppe, bestehend aus ABS (Acrylnitril/Butadien/Styrol), Polyethylen, Polypropylen, Polypropylen-Copolymer und EPDM (Ethylen/Propylen/Dien)-Elastomer;
(B) Polyetheresteramid;
(C) eine Ionen-Quelle, aufweisend: (i) eine Quelle für mindestens eine Carboxyl-Gruppe oder Sulfo-Gruppe, die ausgewählt ist aus der Gruppe, bestehend aus Kohlenwasserstoffsäuren mit 6 bis 54 Kohlenstoffatomen, Sulfonsäuren und organischen Polymeren mit mindestens einer Carboxyl-Gruppe oder Sulfo-Gruppe; und (ii) eine Quelle für mindestens ein Metallion, das ausgewählt ist aus der Gruppe, bestehend aus Natrium-Ion, Kalium-Ion, Lithium-Ion, Magnesium-Ion und Zink-Ion, und das mit den Carboxyl-Gruppen oder der Sulfo-Gruppe von (i) reagieren kann, feste Elektrolyten oder Polymerelektrolyten; und
(D) einen Weichmacher des vorgenannten Polyetheresteramids (B).

8. Zusammensetzung nach Anspruch 1, ferner aufweisend ein Hydrophobierungsmittel, aufweisend fluorierte Verbindungen, eine Siliciumverbindung oder eine Mischung davon.

9. Formartikel, hergestellt aus der Zusammensetzung nach Anspruch 7.

## Revendications

1. Composition de polymère antistatique **caractérisée en ce qu'**elle comprend:
(A) un ou plusieurs polymères choisis dans le groupe constitué de polyester, de polycarbonate, de polyamide, de polyoxyméthylène, de sulfure de polyphénylène et de composés d'oxyde de polyphénylène et de polystyrène;
(B) un polyétheresteramide;
(C) une source d'ion comprenant: (i) une source d'au moins un groupe carboxyle ou un groupe sulfo qui est choisie dans le groupe constitué d'acides hydrocarbures contenant 6-54 atomes de carbone, d'acides sulfoniques et de polymères organiques avec au moins un groupe carboxyle ou un groupe sulfo; et (ii) une source d'au moins un ion métallique qui est choisi dans le groupe constitué d'un ion sodium, d'un ion potassium, d'un ion lithium, d'un ion magnésium et d'un ion zinc et qui peut réagir avec les groupes carboxyle ou les groupes sulfo de (i), d'électrolytes solides ou d'électrolytes de polymères; et
(D) un plastifiant du polyétheresteramide (B) mentionné ci-dessus.

2. Composition de polymère antistatique suivant la revendication 1, **caractérisée en ce que** le plastifiant (D) du polyétheresteramide (B) est un plastifiant représenté par la formule (1): 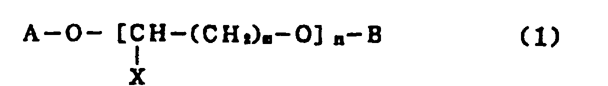 dans laquelle m est un nombre entier de 1-3, n est un nombre entier de 4-25, A est un groupe alkyle C₁-C₁₀, acyle ou aroyle, B est un groupe alkyle C₁-C₁₀, acyle ou aroyle, et X est H, CH₃ ou C₂H₅.

3. Composition de polymère antistatique suivant la revendication 1, **caractérisée en ce qu'**elle contient 40,0-98,4% en poids de polymère (A), 1,0-35,0% en poids de polyétheresteramide (B), 0,1-15,0% en poids de source d'ion (C) et 0,5-10,0% en poids de plastifiant (D) par rapport au poids de la composition dans son ensemble.

4. Moulages **caractérisés en ce qu'**ils sont moulés à partir de la composition de polymère antistatique suivant la revendication 1.

5. Parties de guidage séparant un milieu de transfert pour des dispositifs électrophotographiques **caractérisées en ce qu'**elles sont moulées à partir de la composition de polymère antistatique suivant la revendication 1.

6. Article moulé fabriqué à partir de la composition suivant la revendication 4 présentant une résistivité de surface dans l'intervalle de 10⁷ à 10¹³ Ohms, mesurée sous la spécification ASTM D 257, et avec une peinture électrostatique directement appliquée sur la surface de celui-ci.

7. Composition de polymère antistatique **caractérisée en ce qu'**elle comprend:
(A) un ou plusieurs polymères choisis dans le groupe constitué de ABS (acrylonitrile-butadiène-styrène), de polyéthylène, de polypropylène, d'un copolymère de polypropylène et d'un élastomère EPDM (éthylène/propylène/diène);
(B) un polyétheresteramide;
(C) une source d'ion comprenant: (i) une source d'au moins un groupe carboxyle ou un groupe sulfo qui est choisie dans le groupe constitué d'acides hydrocarbures contenant 6-54 atomes de carbone, d'acides sulfoniques et de polymères organiques avec au moins un groupe carboxyle ou un groupe sulfo; et (ii) une source d'au moins un ion métallique qui est choisi dans le groupe constitué d'un ion sodium, d'un ion potassium, d'un ion lithium, d'un ion magnésium et d'un ion zinc et qui peut réagir avec les groupes carboxyle ou les groupes sulfo de (i), d'électrolytes solides ou d'électrolytes de polymères; et
(D) un plastifiant du polyétheresteramide (B) mentionné ci-dessus.

8. Composition suivant la revendication 1, comprenant en outre un hydrofuge comprenant des composés fluorés, un composé de silicium ou un mélange de ceux-ci.

9. Article moulé fabriqué à partir de la composition suivant la revendication 7.
